# EUROPEAN PATENT SPECIFICATION

(11) **EP 3 705 752 B1**
(45) Date of publication and mention of the grant of the patent: **13.12.2023**
(21) Application number: 20160124.2
(22) Date of filing: 28.02.2020
(51) Int. Cl.: F16H 37/08, B60K 17/16, F16D 11/14

(54) **DIFFERENTIAL ASSEMBLY WITH MULTIPLE VELOCITIES**
DIFFERENTIALANORDNUNG MIT MEHREREN GESCHWINDIGKEITEN
ENSEMBLE DIFFÉRENTIEL À PLUSIEURS VITESSES

(30) Priority: 05.03.2019 IT 201900003181
(43) Date of publication of application: 09.09.2020
(73) Proprietor: Iveco S.p.A., 10156 Torino (IT)
(72) Inventor: PEREIRA DE LEMOS, José Francivaldo, SETE LAGOAS MG (BR)
(74) Representative: Studio Torta S.p.A.

(56) References cited:
- GB-A- 808 543
- US-A- 2 666 337
- US-A- 4 207 780

## Description

### TECHNICAL FIELD

The invention relates to a differential assembly, more in particular to a differential assembly for a heavy vehicle.

### KNOWN STATE OF THE ART

The differential is a power transmission member available in engine vehicles to distribute the torque coming from an input shaft to a pair of output shafts connected to respective wheels. In particular, as it is known, the differential allows different velocities to be delivered to the wheels, so as to allow each one of them to follow the relative trajectory during paths covering a bend or paths with different grips.

In its most simple configuration, a differential comprises a carrier, which is constrained to two shafts and to two planet gears placed on the shafts and meshes with two driven gears, which are integral to the axle shafts, each connected to the respective wheel.

Known differentials are also provided with a locking function, which is configured to cause the two axle shafts to be integral to one another. This function is useful in case of a surface allowing for a reduced grip of the tyres, in which case one of the two wheels, if it were not constrained to the other one, would tend to skid, thus dispersing the torque.

Examples of such known differentials are disclosed in documents US4207780 A1, which forms the basis for the preamble of claim 1, GB808543 A or US2666337 A.

However, known differentials are subjected to a constant need for improvements, so as to ensure a versatile use thereof and increase the functions thereof.

Therefore, existing vehicle differentials need to be improved.

The object of the invention is to fulfil the needs discussed above in an economic fashion.

### SUMMARY OF THE INVENTION

The aforesaid object is reached by a differential assembly according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
• figure 1 shows a perspective view, with parts removed for greater clarity, of a differential assembly according to the invention;
• figure 2 shows a perspective view, with further parts removed for greater clarity, of the differential assembly of figure 1;
• figure 3 shows a schematic cross-sectional view of part of the differential assembly according to the invention;
• figures 4 and 5 show respective schematic cross-sectional views of the differential assembly of figure 3 in two different operating stages;

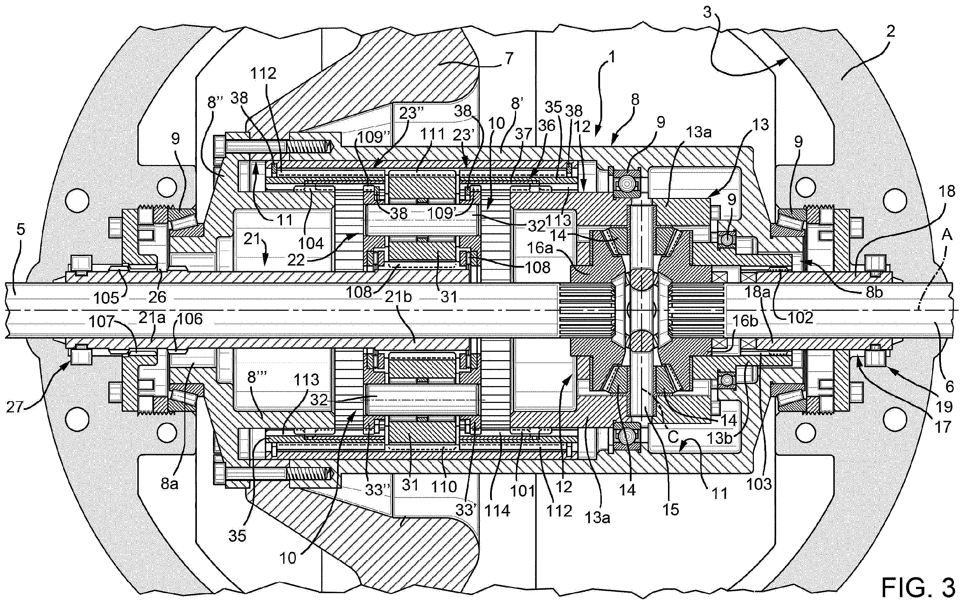

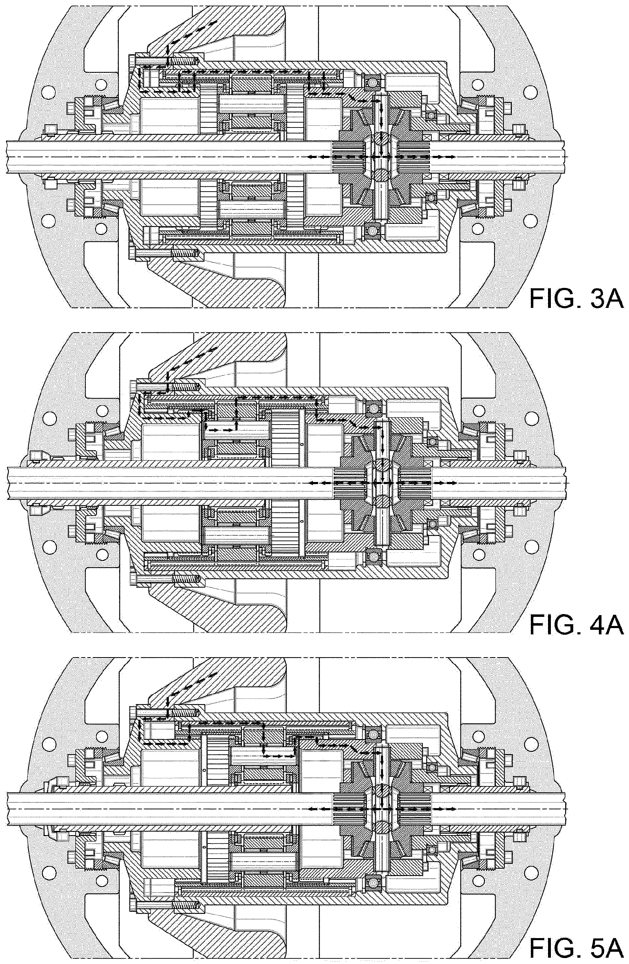

• figures 3A-4A-5A reproduce figures 3, 4 and 5 with an indication, by means of arrows, of the torque flow in the differential assembly according to the invention in different operating conditions; and

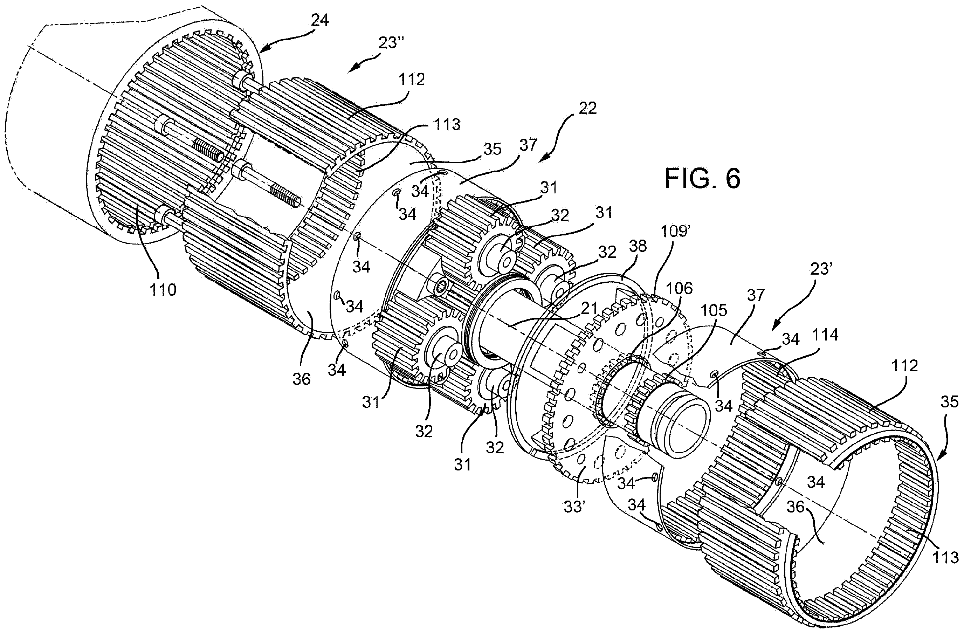

• figure 6 shows an exploded perspective view of some elements of the differential assembly according to the invention.

### DETAILED DESCRIPTION OF THE INVENTION

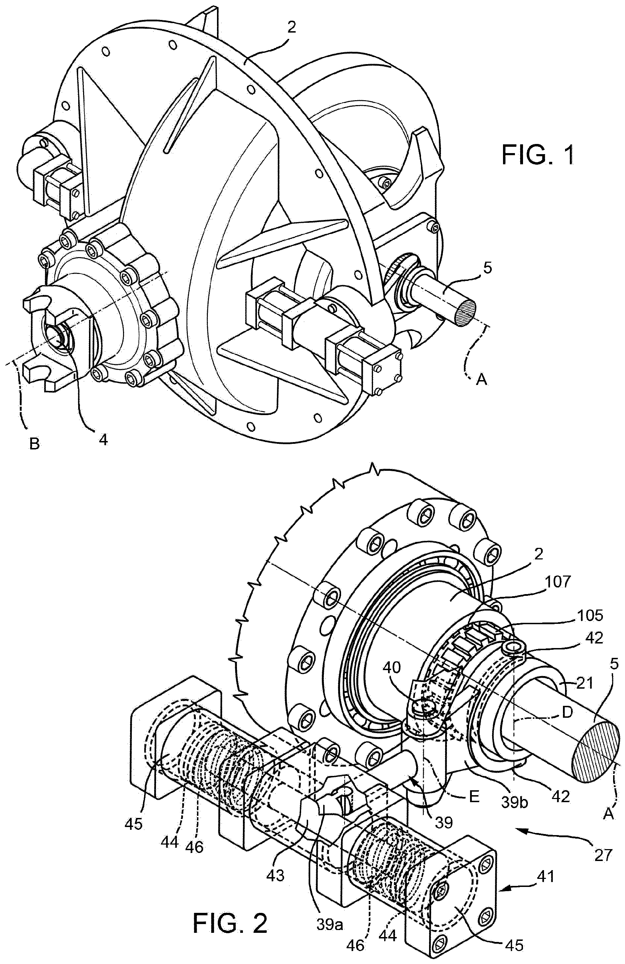

Figures 1 and 3 show a differential assembly 1 for vehicles according to the invention, which is surrounded by a casing 2 defining a closed volume 3, which houses the differential assembly 1. The casing 2 is configured so as to let in a drive shaft 4 and let out a pair of output shafts 5, 6, namely the left and right axle shafts of respective wheels of a vehicle.

As it is known, the drive shaft 4 is parallel to a longitudinal axis B of the vehicle and the shafts 5, 6 of the axle shafts are perpendicular to the latter and coaxial to one another along an axis A. The drive shaft 4 is configured so as to cooperate with a bevel gear 7, which is arranged inside the volume 3.

The differential assembly 1 comprises a rotating support element, in the following named as rotating structure 8, which rigidly carries the bevel gear 7 and is supported, in such a way that it can freely rotate, by the casing 2 inside the volume 3 by means of known rolling means 9, for example a pair of conical roller bearings.

The rotating structure 8 defines a volume 11, which houses, on the inside, the remaining elements of the differential assembly 1 according to the invention. The volume 11 obviously is open along the axis A so as to allow the axle shafts 5, 6 to go through; as a consequence, the rotating structure 8 defines respective openings 8a, 8b to allow for the passage of the axle shafts 5, 6.

The differential assembly 1 further comprises a differential 12, which can be of any known type, and torque-selector means 10, which are configured to mechanically couple the rotating structure 8 to the differential 12 through a plurality of predefined transmission ratios. The differential 12 is advantageously arranged close to the opening 8b, whereas the torque-selector means 10 are arranged on the opposite side, namely close to the opening 8a inside the volume 11.

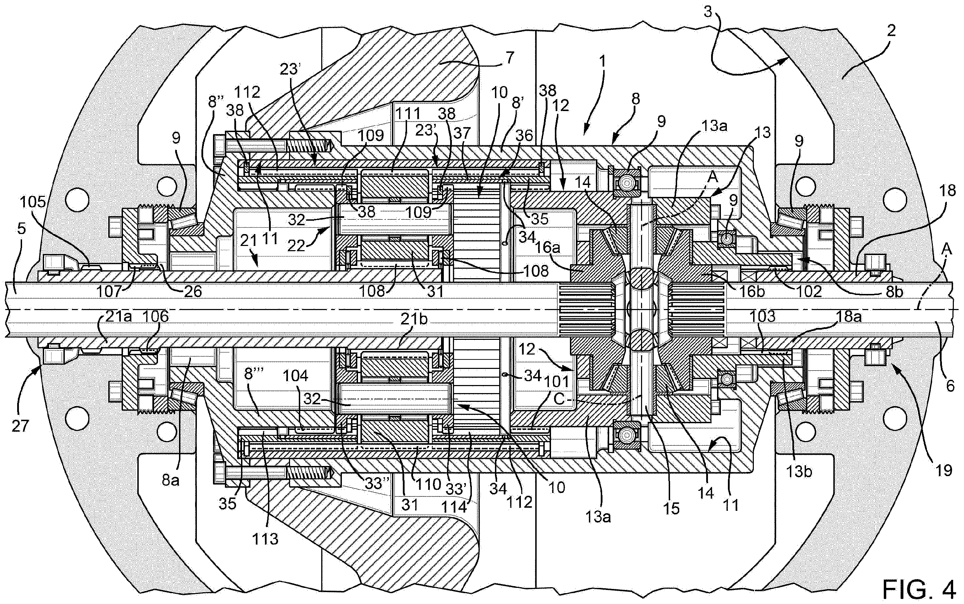

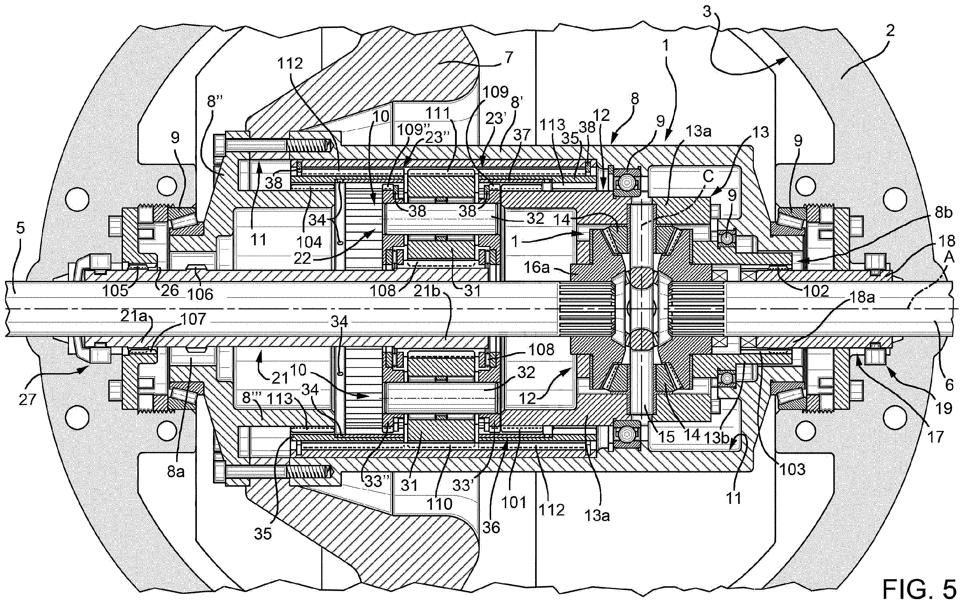

The torque-selector means 10 are advantageously configured to allow the rotating structure 8 and the differential 12 to be connected through a neutral coupling, in which the torque (and the velocity) of the rotating structure 8 is transmitted to the differential 12 without changes, and through at least one between a high-velocity coupling (figure 4), in which the velocity of the rotating structure 8 is transmitted to the differential 12 increased (and decreased in torque), and a low-velocity coupling (figure 5), in which the velocity of the rotating structure 8 is transmitted to the differential 12 decreased (and increased in torque).

The differential 12 comprises a gear-train carrier 13, which is carried, so that it can freely rotate, by the rotating structure 8 by means of rolling members 9, for example ball bearings. According to the embodiment described herein, the gear-train carrier 13 comprises a first portion 13a and a second portion 13b, which are coaxial to one another and are rigidly connected to one another.

In particular, the first portion 13a has a substantially tubular shape and defines a toothing 101, which extends, from an outer surface of its end facing away from the opening 8b, in circumferential manner around the axis A. The second portion 13b has a substantially tubular shape, as well, and has a smaller radial extension than the first portion 13a, so as to be contained inside the latter.

The first portion 13a of the gear-train carrier 13 carries a plurality of planet gears 14, for example four planet gears, which are angularly equally spaced apart from one another by 90° and are supported by a cross shaped support 15, which is rigidly carried by the first portion 13a and around whose arms the planet gears 14 can rotate. In particular, the planet gears rotate around axes contained in a plane C, which is perpendicular to the axis A.

The planet gears 14 cooperate with a driven gear, a left bevel gear 16a and a right bevel gear 16b, respectively, which are rigidly carried by the axle shaft 5 and by the axle shaft 6, respectively.

The differential assembly 1 can further comprise blocking means 17, which are configured to lock the differential 12, namely make the gear-train carrier 13 integral to the casing 2.

In particular, the blocking means 17 comprise a sleeve 18, which is carried by the second portion 13b of the gear-train carrier 13 in a linearly movable manner relative to the casing 2. In the embodiment described herein, the sleeve 18 is housed, in a sliding manner, coaxially to the right axle shaft 6 and comprises an end portion 18a, which faces the gear-train carrier 13 and is provided with a toothing 102, which extends, from its outer surface, in a circumferential manner around the axis A and is configured to cooperate with a respective toothing 103, which circumferentially extends around the axis A from an inner surface of the second portion 13b of the gear-train carrier 13.

The sleeve 18 is configured to operatively assume a first position, in which the toothing 102 does not cooperate with the toothing 103, and a second condition, in which the toothing 102 cooperates with the toothing 103, thus causing the gear-train carrier 13 to be integral to the casing 2, hence allowing the velocity coming from the drive shaft 4 to be equally divided between the axle shafts 5, 6, basically cancelling the differential function. The sleeve 18 is operated by means of movement means 19, which are better described below.

It is further clear, according to the accompanying drawings, that the differential 12 can comprise further mechanical elements, such as friction rings, further rolling or thrust-bearing bearings or even couplings, which are not described herein for the sake of brevity, as they are already known to a person skilled in the art.

The rotating structure 8 preferably comprises a first portion 8', which defines the second opening 8b, and a second portion 8", which is rigidly connected to the first portion 8' and defines the first opening 8a.

The two portions 8', 8" define a substantially cylindrical shape with volume 11, as mentioned above, and, hence, they each comprise a side wall and an axial wall with dimensions that are substantially similar for the two portions 8', 8". According to the embodiment shown herein, a gear of the bevel gear 7 is rigidly carried by the movable structure 8, in particular interposed between the portions 8', 8" and connected to them, for example by means of threaded means.

The second portion 8" of the rotating structure 8 further comprises an engagement portion 8‴, which extends, coaxially to the axis A, from the axial wall of the second portion 8" into the volume 11. In particular, said engagement portion 8" has an outer diameter having the same value as the outer diameter of the first portion 13a of the gear-train carrier 13. An end portion of the engagement portion 8" is provided with a toothing 104 extending, from its outer surface, in a circumferential manner around the axis A.

The torque-selector means 10 are configured to mechanically connect the toothing 104 of the rotating structure 8 to the toothing 101 of the gear-train carrier 13, changing the velocity and, hence, the torque, present in the rotating structure 8 compared to the velocity and, hence, the torque delivered to the gear-train carrier 13.

According to the embodiment described herein, the torque-selector means 10 basically comprise a selector shaft 21, a planetary gear train 22, which is rigidly carried by the selector shaft 21, a pair of sliding gear assemblies 23 cooperating with the planetary gear train 22 and a ring gear 24, which is carried by the rotating support 8 and cooperates with the planetary gear train 22 and with the sliding gear assemblies 23.

More in detail, the selector shaft 21 comprises a first end portion 21a close to the opening 8a, which is provided with a pair of toothings 105, 106, which each extend, from its outer surface, in a circumferential manner around the axis A. The toothings 105, 106 are separated by a free space 26 and are configured to selectively cooperate with a corresponding toothing 107 obtained on the casing 2.

The selector shaft 21 is preferably housed so as to be coaxial to and slide on the left axle shaft 5 and is operated so as to reach, by means of movement means 27, a first position (figure 3), in which none of the toothings 105, 106 mesh with the toothing 107, a second position (figure 4), in which the toothing 106 meshes with the toothing 107, and a third position (figure 5), in which the toothing 105 meshes with the toothing 107. As a consequence, in the first position the selector shaft 21 is idle, whereas in the second and in the third position the selector shaft 21 is fixed to the casing 2.

The selector shaft 21 further comprises a second end portion 21b, which is provided with a toothing 108, which extends, from its outer surface, in a circumferential manner around the axis A and is configured to cooperate with a plurality of planet gears 31, which are carried by the planetary gear train 22.

In particular, there are four planet gears 31, which are arranged in a cross shape and are supported by respective pins 32, which are rigidly carried by a pair of gear-train carriers 33, more precisely a right gear-train carrier 33' and a left gear-train carrier 33". Each one of said right and left s 33', 33" substantially comprises a disc, which serves as support for the pins 32 and is externally provided with a toothing 109', 109", which is configured to cooperate with the respective sliding gear assembly 23, a right assembly 23' and a left assembly 23", respectively.

The ring gear 24 basically comprises a cylindrical bushing, which is housed inside the volume 11 and is provided with an outer surface cooperating, in a sliding manner, with the inner surface of the rotating structure 8. The bushing is provided with an inner toothing 110, which extends, from its inner surface, in a circumferential manner around the axis A along its entire length and cooperates with a toothing 111, which extends from the outer surface of each one of the planet gears 31 mentioned above. Hence, the ring gear 24 acts as "ring gear" for the planetary gear train 22, whereas there is a grooved guide coupling for the sliding gear assemblies 23', 23".

For the sake of brevity, one single sliding gear 23 will be described, namely the left sliding gear assembly 23", since the right one 23' is symmetrical to the left one.

The sliding gear assembly 23'' comprises a toothed ring 35 with a substantially tubular shape, which is provided with a toothing 112, which extends, from its outer surface, in a circumferential manner around the axis A along the entire length of its extension along the latter. The toothing 112 is configured to cooperate with the inner toothing 110 of the ring gear 24.

The toothed ring 35 defines, on the inside, a further toothing 113, which extends from the inner surface of an end portion of its and is configured to selectively cooperate with the toothing 104 of the engagement portion 8‴ of the rotating structure 8. The toothed ring 35, at the end opposite the one provided with the toothing 113, internally defines an annular seat 36, which is configured to cooperate with a toothed bushing 37.

The toothed bushing 37 is housed in the annular seat 36 and comprises an outer surface, which is configured to cooperate, in a sliding manner, in the annular seat 36, and a toothing 114, which extends, from its inner surface, in a circumferential manner around the axis A along the entire length of its extension along the latter.

The toothing 114 is configured to constantly cooperate with the toothing 109' of the gear-train carrier 33" and, selectively, with the toothing 104 of the engagement portion 8‴ of the rotating structure 8.

All the toothings 101-114 described above can preferably by toothings with straight teeth.

The toothed bushing 37 further comprises, on the inner surface not provided with the toothing, a plurality of holes 34, which are configured to allow oil to reach the different elements of the differential assembly 1. Similar holes can be provided on the toothed ring 35 and/or on the ring gear 24.

The selector shaft 21, the planetary gear train 22, the sliding gear assemblies 23', 23" and the ring gear 24 are laterally connected to one another by means of a plurality of rings 38, which are configured to limit the side movement of the different elements of the torque-selector means 10 relative to one another, so that a movement of the selector shaft 21 along the axis A turns into an identical movement of the planetary gear train 22, of the sliding gear assemblies 23', 23" and of the ring gear 24.

In particular, first rings are provided between the selector shaft 21 and the gear-train carriers 33' , 33", further rings are provided between the latter and the toothed bushing 37 and further rings are provided between the ring gear 24 and the toothed ring 35. In this way, the lateral movement, in both directions along the axis A, in transmitted by the shaft 21 to the planetary gear train 22, to the sliding gear assemblies 23', 23" and to the ring gear 24.

As already mentioned above, the selector shaft 21 and the blocking means 17 are operated by movement means 19, 27, which are configured to move the selector shaft 21 and the sleeve 18, respectively, on the respective axle shaft 5, 6, as described below with reference to figure 2.

For the sake of brevity, the sole movement means 27 will be described in detail, as the means 19 are similar to them.

The movement means 27 basically comprise a support arm 39 comprising a first end 39a, which is connected to an actuator 41, and a second end 39b, which is provided with a pair of arms 42, an upper arm and a lower arm, respectively, which are connected to the selector shaft 21 on the opposite side of the toothing 105 relative to the toothing 106. The two arms 42 are advantageously connected to the selector shaft 21 by means of respective hinges, which are coaxial to one another and to an axis D, which is perpendicular to the axis A.

The support arm 39 is hinged relative to the casing 2 by means of a hinge 40, which is arranged in an intermediate position between the first and the second end 39a, 39b of the arm and is configured to allow it to rotate around an axis E, which is parallel to the axis D.

The end 30a is connected to the actuator 41, which is configured to cause it to make a linear movement, which is transmitted, in a reversed manner due to the hinge 40, to the selector shaft 21 so as to allow, or not to allow, one of the teeth 105, 106 to mesh with the teeth 107.

The actuator 41 advantageously is a pneumatic actuator and comprises a rod 43, which is provided, at both ends, with respective pistons 44, which are designed to slide in cylinders 45, which are coaxial to one another and are connected to a pneumatic system of the vehicle. The filling of one of the cylinders 45 - and the consequent discharge of the opposite one - with gas under pressure allows the rod 43 to move along the axis of the cylinders 45. This movement of the rod 43 is transmitted to the support arm 39 and, as already mentioned above, to the shaft 21. The gas under pressure injected into the cylinders 45 advantageously is a gas of a pneumatic system of the vehicle or, alternatively, a gas stored in a dedicated tank under pressure.

Between the pistons 44 and a case defining the cylinders 45 there preferably are elastic means 46, which are configured to remain in a rest position, in which the selector shaft 21 does not mesh with any one of the toothings 105, 106.

The movement means 17 can be similar, simply provided with one single cylinder 45, as they have to move the sleeve 18 to one single position relative to the gear-train carrier 13.

The differential assembly 1 according to the invention works as follows.

In a first operating condition, which is shown in figures 3 and 3A, the selector shaft 21 is arranged in such a way that the toothing 107 of the casing 2 is placed in the space 26 between the toothings 105 and 106 and, hence, the selector shaft 21 can rotate in an idle manner. As a consequence, the toothing 104 meshes both with the toothing 113 of the toothed ring 35 and with the toothing 114 of the toothed bushing 37.

Therefore, in this configuration, the torque of the bevel gear 7 is transmitted to the rotating support structure 8 and, through the toothings 104, 113, 114, it is passed on to the left sliding gear assembly 23", which transmits the torque to the ring gear 24 thanks to the continuous meshing between the toothing 112 and the inner toothing 110 of the latter. From the ring gear 24, the torque goes back, in an identically reverse manner, from the latter to the gear-train carrier 13, going through the same toothings of the right sliding gear assembly 23', From the gear-train carrier 13, the torque is transmitted to the planet gears 14 and, hence, to the pinions 16a and 16b and, by so doing, to the axle shafts 5, 6.

Since the shaft 21, in this configuration, is idle, the torque transmitted from the ring gear 24 to the plant gear 31, considering the coupling between the toothings 110 and 111, causes the shaft 21 and the gear-train carriers 33', 33" to rotate with the same velocity as the ring gear 24. In this way, the velocity delivered to the gear-train carrier 13 is the same as the one delivered to the rotating support structure 8.

In a second operating condition, which is shown in figures 4 and 4A, the selector shaft 21 is arranged in such a way that the toothing 107 of the casing 2 meshes with the toothing 106 and, hence, the selector shaft 21 is fixed relative to the casing 2.

As a consequence, the toothing 104 meshes with the sole toothing 114 of the toothed bushing 37 of the left sliding gear assembly 32'', whereas the toothing 113 of the toothed ring 35 of the right sliding gear assembly 32' meshes with the sole gear-train carrier 13. Like in the preceding case, the gear-train carriers 33', 33" always cooperate with the toothed bushing 37 thanks to the meshing of the toothings 109', 109" with the toothing 114.

Therefore, in this configuration, the torque of the bevel gear 7 is transmitted to the rotating support structure 8 and, through the toothings 104 and 114, is passed on to the toothed bushing 37, which, by so doing, rotates relative to the toothed ring 35.

From the toothed bushing 37, through the toothings 114 and 109", the torque is transmitted to the gear-train carrier 33" and, hence, through the pins 32, to the planet gears 31; from them, thanks to the toothings 111 and 110, the torque is passed on to the ring gear 24.

From the ring gear 24, the torque is transmitted, thanks to the toothings 110 and 112, to the toothed ring 35 of the sliding gear assembly 32' and, from the latter, thanks to the toothings 113 and 101, it gets to the gear-train carrier 13.

Since the shaft 21, in this configuration, as already mentioned above, is fixed, the planetary gear train 21 acts increasing the velocity outputted by the planet gears 31 (and, hence, decreasing the torque value).

In this way, the velocity delivered to the gear-train carrier 13 is greater than the one delivered to the rotating support structure 8.

In a third operating condition, which is shown in figures 5 and 5A, the selector shaft 21 is arranged in such a way that the toothing 107 of the casing 2 meshes with the toothing 105 and, hence, the selector shaft 21 is fixed relative to the casing 2.

As a consequence, in a mirror-like manner relative to the second operating condition described above, the toothing 104 meshes with the sole toothing 113 of the toothed ring 35 of the left sliding gear assembly 32", whereas the toothing 114 of the toothed bushing 37 of the right sliding gear assembly 32' meshes with the sole gear-train carrier 13. Like in the preceding case, the gear-train carriers 33', 33" always cooperate with the toothed bushing 37 thanks to the meshing of the toothings 109', 109'' with the toothing 114.

Therefore, in this configuration, the torque of the bevel gear 7 is transmitted to the rotating support structure 8 and, through the toothings 104 and 113, is passed on to the toothed ring 35, which, by so doing, rotates relative to the toothed bushing 37 and drags the ring gear 24.

Thanks to the toothings 110 and 11, the torque is transmitted from the ring gear 31 and from them, through the pins 32, to the gear-train carrier 33'. From the latter, the torque is transmitted, through the toothings 109' and 114, to the toothed bushing 37 of the sliding gear assembly 32' and, from the there, since the toothing 114 meshes with the toothing 101, to the gear-train carrier 13.

Since the shaft 21, in this configuration, as already mentioned above, is fixed, the planetary gear train 21 acts decreasing the velocity delivered to the planet gears 31 (and, hence, increasing the torque value).

In this way, the velocity delivered to the gear-train carrier 13 is smaller than the one delivered to the rotating support structure 8.

The activation of a specific configuration can be carried out based on the needs of the user through a relative control on the dashboard of the vehicle or automatically thanks to the recognition of a predetermined torque-velocity condition.

Once the configuration to be set has been chosen, the selector shaft 21 is moved through the support arm 39, which is controlled by the pneumatic actuator 41.

In particular, according to the embodiment described herein, in the first operating condition, the cylinders 45 are not under pressure, so that the springs 46 keep the rod 43 in a neutral position in order to allow the selector shaft 21 to be arranged in such a way that none of the toothings 105, 106 mesh with the toothing 107.

In order to change the position of the selector shaft 21 either to the second or to the third operating condition, it is necessary to feed gas under pressure into one of the two cylinders, which moves the relative piston 44 and, hence, the rod 43, which allows the support arm 39 to cause the rotation, around the hinge 40, of the arms 42 connected to shaft 21, which consequently moves along the axis A.

If needed, the user can activate the blocking means 17, namely move the sleeve 18 so that the toothings 102 and 103 mesh with one another, thus making the gear-train carrier 13 integral to the pinions 16a, 16b and, hence, causing the velocities outputted by the axle shafts 5, 6 to be equal. The activation of the sleeve 18 is similar to the one of the movement means 27 and, therefore, it is not described for the sake of brevity.

Owing to the above, the advantages of a differential assembly 1 according to the invention are evident.

The differential assembly 1, thanks to the torque selector means 10, allows the transmission ratios to be multiplied compared to the ones provided by the transmission, so as to define, like in the case described herein, three further transmission ratios, which multiply the ones already existing thanks to the transmission of the vehicle.

In this way, it is possible to provide a versatile differential for different types of driving styles and loads of the vehicle.

The arrangement of the torque-selector means 10 and of the differential 12 inside a rotating structure 8 connected to the drive shaft 3 leads to a reduction of the space taken up and allows all the gears of the torque-selector means 10 and of the differential 12 to remain closed within a relatively protected and lubricated space.

The construction of the elements of the torque-selector means 10, which comprise a selector shaft 21, which is the sun gear of a planetary gear train 22 connected to a sun gear 24 with gears 23 provided with toothings, which can selectively mesh with the rotating structure 8 or the differential 12, allows the transmission ratios to be obtained in an extremely compact manner, which can easily be assembled and manufactured.

The movement of the selector shaft 21, which is caused by the pneumatic-mechanical system described above, which comprises the actuator 41 and the hinged support arm 29, is precise and can be handled by a simplified logic, which can be automated. Furthermore, the pressure with which to operate the support arm 29 is low, thanks to the lever mechanism of the hinge 40.

Finally, the differential assembly 1 according to the invention can be subjected to changes and variants, which, though, do not go beyond the scope of protection set forth in the appended claims.

In particular, the arrangement of the elements of the torque-selector means 10 and of the differential 12 inside the volume 11 could be different.

The differential 12 could comprise different elements, as already mentioned above, and the gears described above could be of different types, for example helical gears.

The movement means 19, 27 could obviously be provided with different actuator means, for example hydraulic or electric actuator means.

## Claims

1. A differential assembly (1) for a heavy vehicle, said differential assembly (1) comprising a rotating support element (8), a differential (12), and torque-selector means (10),
said rotating support element (8) being carried, in such a way that it can rotate freely, by a casing (2) and being connectable to a drive shaft (4) of said vehicle, said rotating support element (8) defining an internal volume (11) configured to house said differential (12) and said torque-selector means (10),
said differential (12) being configured to divide a torque at input into a pair of shafts (5, 6) of said vehicle,
said torque-selector means (10) connecting said rotating support element (8) to said differential (12) according to a plurality of different transmission ratios,
wherein said torque-selector means (10) comprise a selector shaft (21), a ring gear (24), a planetary gear train (22), the sun gear of which is said selector shaft (21) and comprising a plurality of planet gears (31), which mesh between said selector shaft (21) and said ring gear (24),
said differential assembly (1) being **characterized in that** said torque-selector means (10) comprise a pair of second gears (23', 23"), said planetary gear train (22) comprising a pair of gear-train carriers (33', 33") carried by said planet gears (31), each meshing, respectively, with one of said second gears (23', 23"),
said first gear (22) is connected to said ring gear (24), to said pair of second gears (23', 23"), and
said ring gear (24) comprises a cylindrical bushing housed within said volume (11) and configured to cooperate with an outer surface thereof in sliding manner with the inner surface of said rotating support element (8) and defining an inner toothing (110) that radially extends radially inner on the opposite side with respect to said support element (8),
one of said second gears (23') connecting said first gear (22) to said differential (12) and the other of said second gears (23") connecting said first gear (22) to said rotating support element (8),
said planetary gear train (22) and said pair of second gears (23, 23') modifying the torque/velocity between said rotating support (8) and said differential (12) according to the position of said selector shaft (21) with respect to said casing (2),
each of said second gears (23', 23") comprises a toothed ring (35) which constantly externally meshes with said inner toothing (110) of said ring gear (24) and can selectively internally mesh with said rotating support element (8), and a toothed bushing (37), which is slidingly carried internally by said toothed ring (35), and on the inside constantly meshes with a respective gear-train carrier (33', 33"), wherein one of said toothed rings (35) and one of said toothed bushings (37) can selectively mesh with said differential (12), the other toothed ring (35) and the other toothed bushing (37) can selectively internally mesh with said rotating support element (8).

2. The differential assembly according to claim 1, wherein said plurality of different transmission ratios comprises a neutral transmission ratio where the torque/velocity from the rotating element (8) is transmitted unchanged to the differential (12), and at least one transmission ratio, where the torque/velocity from the rotating element (8) is transmitted at an increased or reduced value to the differential (12).

3. The differential assembly according to claim 1 or 2, wherein said rotating support element (8) comprises a first portion (8') defining a first opening (8b) configured to allow passage of one of said shafts (5, 6), and a second portion (8"), fixed in a reversible way to said first portion (8') and defining a second opening (8a) configured to allow passage of the other of said shafts (5, 6), one between said first and second portions (8', 8") being connected to said drive shaft (3) by means of a gear (7).

4. The differential assembly according to any one of the preceding claims, wherein said selector shaft (21) is configured:
to assume a first position where it is idle and said torque/velocity from said rotating support element (8) is transmitted unchanged to said differential (12); and
to assume at least one second position where it is fixed to said casing (2) and said torque/velocity from said rotating support element (8) is transmitted to said differential (12) either increased or reduced.

5. The differential assembly according to any one of the preceding claims, wherein said torque-selector means (10) comprise a plurality of side-containment means (38) interposed between said selector shaft (21) and said one first gear (22),
between said first gear and said pair of second gears (23', 23''), and
between said pair of second gears (23', 23") and said ring gear (24),
said plurality of side-containment means (38) keeping said torque-selector means (10) packed together so that a movement of said selector shaft (21) corresponds to an equal movement of all the other elements.

6. The differential assembly according to any one of the preceding claims, wherein meshing is obtained by means of respective toothings with straight teeth carried by the respective meshing elements.

7. The differential assembly according to any one of the preceding claims, comprising blocking means (17) configured for blocking the function of said differential (12) .

8. The differential assembly according to any one of the preceding claims, comprising movement means (27) configured for moving said selector shaft (21), said movement means (27) comprising a supporting arm (39) connected to said selector shaft (21) and an actuator (41), configured for moving said supporting arm (39).

9. The differential assembly according to claim 8, wherein said supporting arm (39) comprises a first end (39a) connected to said actuator (41), a second end (39b) hinged to said selector shaft (21) and being hinged, in an intermediate position between said ends (39a, 39b), to said casing (2).

10. The differential assembly according to claim 8 or 9, wherein said actuator (41) is a pneumatic actuator.

## Patentansprüche

1. Differenzialanordnung (1) für ein Schwerlastfahrzeug, welche Differenzialanordnung (1) ein rotierendes Lagerelement (8), ein Differenzial (12) und ein Drehmoment-Auswahlmittel (10) umfasst,
wobei das rotierende Lagerelement (8) auf solche Weise durch ein Gehäuse (2) getragen wird, dass es sich frei drehen kann und mit einer Antriebswelle (4) des Fahrzeugs verbindbar ist, wobei das rotierende Lagerelement (8) ein inneres Volumen (11) begrenzt, welches dazu ausgebildet ist, das Differenzial (12) und das Drehmoment-Auswahlmittel (10) aufzunehmen,
das Differenzial (12) so ausgebildet ist, ein am Eingang anliegendes Drehmoment auf ein Paar von Wellen (5,6) des Fahrzeugs zu verteilen,
das Drehmoment-Auswahlmittel (10) das rotierende Lagerelement (8) mit dem Differenzial (12) entsprechend einer Mehrzahl unterschiedlicher Übersetzungsverhältnisse verbindet,
und wobei das Drehmoment-Auswahlmittel (10) eine Auswahlwelle (21), ein Ringzahnrad (24) und einen Planetengetriebezug (22) umfasst, von welchem das Sonnenrad die Auswahlwelle (21) ist und welches eine Mehrzahl von Planetenrädern (31) umfasst, welche der Auswahlwelle (21) und das Ringzahnrad (24) dazwischenliegend kämmen,
welche Differenzialanordnung (1) **dadurch gekennzeichnet ist, dass** die Drehmoment-Auswahlmittel (10) ein Paar zweiter Zahnräder (23', 23") umfassen, und der Planetengetriebezug (22) ein Paar von Getriebezugträgern (33', 33") umfasst, die von den Planetenrädern (31) getragen werden und jeweils eines der zweiten Zahnräder (23 ', 23 ") kämmen,
wobei das erste Zahnrad (22) mit dem Ringzahnrad (24) zum zweiten Paar zweiter Zahnräder (23', 23") verbunden ist, und
das Ringzahnrad (24) eine zylindrische Buchse umfasst, die innerhalb des Volumens (11) aufgenommen ist und dazu ausgebildet ist, mit einer äußeren Oberfläche gleitend mit der inneren Oberfläche des rotierenden Lagerelements (8) zusammenzuwirken und eine innere Zahnung (11) zu definieren, die sich radial nach innen auf der gegenüberliegenden Seite bezüglich des Lagerelements (8) erstreckt,
eines der zweiten Zahnräder (23 `) das erste Zahnrad (22) mit dem Differenzial (12) verbindet und das andere zweite Zahnrad (23") das erste Zahnrad (22) mit dem rotierenden Lagerelement (8) verbindet,
der Planetengetriebezug (22) und das Paar zweiter Zahnräder (23, 23') das Drehmoment/die Geschwindigkeit zwischen dem rotierenden Lager (8) und dem Differenzial (12) gemäß der Position der Auswahlwelle (21) bezüglich des Gehäuses (2) verändert,
und jedes der beiden Zahnräder (23', 23") einen gezahnten Ring (35) umfasst, der ständig außen die innere Zahnung (110) des Ringzahnrads (24) kämmt und selektiv innen das rotierende Lagerelement (8) kämmen kann, und eine gezahnte Buchse (37), die gleitend innen von dem gezahnten Ring (35) getragen wird und auf der Innenseite ständig einen entsprechenden Getriebezugträger (33', 33") kämmt, wobei einer der gezahnten Ringe (35) und eine der gezahnten Buchsen (37) selektiv das Differenzial (12) kämmen können, und der andere gezahnte Ring (35) und die andere gezahnte Buchse (37) selektiv innen das rotierende Lagerelement (8) kämmen können.

2. Differenzialanordnung gemäß Anspruch 1, bei welcher die Mehrzahl unterschiedlicher Übersetzungsverhältnisse ein neutrales Übersetzungsverhältnis umfasst, in welchem das Drehmoment/die Geschwindigkeit unverändert vom Rotationselement (8) auf das Differenzial (12) übertragen wird, sowie zumindest ein Übersetzungsverhältnis, in welchem das Drehmoment/die Geschwindigkeit vom Rotationselement (8) zu einem verringerten oder reduzierten Wert auf das Differenzial (12) übertragen wird.

3. Differenzialanordnung gemäß Anspruch 1 oder 2, bei welchem das rotierende Lagerelement (8) einen ersten Teil (8') umfasst, der eine erste Öffnung (8b) begrenzt, die dazu ausgebildet ist, den Durchgang von einer der Wellen (5,6) zu ermöglichen, und einen zweiten Teil (8"), der auf reversible Weise zum ersten Teil (8') befestigt ist und eine zweite Öffnung (8a) begrenzt, dazu ausgebildet, den Durchgang der anderen der Wellen (5, 6) zu ermöglichen, wobei einer der ersten und zweiten Teile (8', 8") mit der Antriebswelle (3) durch ein Getriebe (7) verbunden ist.

4. Differenzialanordnung gemäß einem der vorhergehenden Ansprüche, bei welcher die Auswahlwelle (21) dazu ausgebildet ist,
eine erste Position einzunehmen, in welcher sie leerläuft und das Drehmoment/die Geschwindigkeit von dem rotierenden Lagerelement (8) unverändert auf das Differenzial (12) übertragen wird; und
zumindest eine zweite Position einzunehmen, in welcher sie an dem Gehäuse (2) befestigt ist und das Drehmoment/die Geschwindigkeit von dem rotierenden Lagerelement (8) auf das Differenzial (12) entweder vergrößert oder vermindert übertragen wird.

5. Differenzialanordnung gemäß einem der vorhergehenden Ansprüche, bei welcher die Drehmoment-Auswahlmittel (10) eine Mehrzahl von Seitenbegrenzungsmitteln (38) umfassen, die zwischen der Auswahlwelle (21) und dem einen ersten Zahnrad (22), zwischen dem ersten Zahnrad und dem Paar zweiter Zahnräder (23', 23") und zwischen dem Paar zweiter Zahnräder (23', 23") und dem Ringzahnrad (24) angeordnet sind,
wobei die Mehrzahl von Seitenbegrenzungsmitteln (38) die Drehmoment-Auswahlmittel (10) derart gepackt halten, dass eine Bewegung der Auswahlwelle (21) einer gleichen Bewegung aller anderen Elemente entspricht.

6. Differenzialanordnung gemäß einem der vorhergehenden Ansprüche, bei welcher das Kämmen durch entsprechende Zahnungen mit geraden Zähnen erreicht wird, die von jeweils kämmenden Elementen getragen werden.

7. Differenzialanordnung gemäß einem der vorhergehenden Ansprüche, umfassend Blockiermittel (17) zum Blockieren der Funktion des Differenzials (12).

8. Differenzialanordnung gemäß einem der vorhergehenden Ansprüche, umfassend Bewegungsmittel (27), ausgebildet zum Bewegen der Auswahlwelle (21), welche Bewegungsmittel (27) einen Tragarm (39) umfassen, der mit der Auswahlwelle (21) verbunden ist, und ein Betätigungsorgan (41), ausgebildet zum Bewegen des Tragarms (39).

9. Differenzialanordnung gemäß Anspruch 8, bei welcher der Tragarm (39) ein erstes Ende (39a) umfasst, das mit dem Betätigungsorgan (41) verbunden ist, und ein zweites Ende (39b), das an die Auswahlwelle (21) angelenkt und in einer mittleren Position zwischen den Enden (39a, 39b) an das Gehäuse (2) angelenkt ist.

10. Differenzialanordnung gemäß Anspruch 8 oder 9, bei welcher das Betätigungsorgan (41) ein pneumatisches Betätigungsorgan ist.

## Revendications

1. Ensemble différentiel (1) pour un véhicule lourd, ledit ensemble différentiel (1) comprenant un élément de support rotatif (8), un différentiel (12), et un moyen de sélection de couple (10),
ledit élément de support rotatif (8) étant porté, de manière à pouvoir tourner librement, par un carter (2) et pouvant être relié à un arbre d'entraînement (4) dudit véhicule, ledit élément de support rotatif (8) définissant un volume interne (11) configuré pour loger le différentiel (12) et ledit moyen de sélection de couple (10),
ledit différentiel (12) étant configuré pour diviser un couple à une entrée dans une paire d'arbres (5, 6) dudit véhicule,
ledit moyen de sélection de couple (10) reliant ledit élément de support rotatif (8) audit différentiel (12) selon une pluralité de rapports de transmission différents,
dans lequel ledit moyen de sélection de couple (10) comprend un arbre de sélection (21), une couronne dentée (24), un train planétaire (22), dont la roue solaire est ledit arbre de sélection (21) et comprenant une pluralité de satellites (31), qui s'engrènent entre ledit arbre de sélection (21) et ladite couronne dentée (24),
ledit ensemble différentiel (1) étant **caractérisé en ce que** ledit moyen de sélection de couple (10) comprend une paire de deuxièmes engrenages (23', 23"), ledit train planétaire (22) comprenant une paire de porteurs de train d'engrenages (33', 33'') portés par lesdits satellites (31), chacun d'eux s'engrenant respectivement avec l'un desdits deuxièmes engrenages (23', 23"),
ledit premier engrenage (22) est relié à ladite couronne dentée (24), à ladite paire de deuxièmes engrenages (23', 23"), et
ladite couronne dentée (24) comprend une bague cylindrique logée à l'intérieur dudit volume (11) et configurée pour coopérer avec une surface extérieure de celui-ci de manière à coulisser avec la surface intérieure dudit élément de support rotatif (8) et définissant une denture intérieure (110) qui s'étend radialement vers l'intérieur sur le côté opposé par rapport audit élément de support (8),
l'un desdits deuxièmes engrenages (23') reliant ledit premier engrenage (22) audit différentiel (12) et l'autre desdits deuxièmes engrenages (23") reliant ledit premier engrenage (22) audit élément de support rotatif (8),
ledit train planétaire (22) et ladite paire de deuxièmes engrenages (23', 23") modifiant le couple/la vitesse entre ledit support rotatif (8) et ledit différentiel (12) en fonction de la position dudit arbre de sélection (21) par rapport audit carter (2),
chacun desdits deuxièmes engrenages (23', 23") comprend un anneau denté (35) qui s'engrène constamment à l'extérieur avec ladite denture intérieure (110) de ladite couronne dentée (24) et qui peut sélectivement s'engrener à l'intérieur avec ledit élément de support rotatif (8), et une bague dentée (37), qui est portée en coulissant à l'intérieur par ledit anneau denté (35), et s'engrène constamment à l'intérieur avec un porteur de train d'engrenages (33', 33'') respectif, dans lequel l'un desdits anneaux dentés (35) et l'une desdites bagues dentées (37) peuvent s'engrener sélectivement avec ledit différentiel (12), l'autre anneau denté (35) et l'autre bague dentée (37) peuvent sélectivement s'engrener à l'intérieur avec ledit élément de support rotatif (8).

2. Ensemble différentiel selon la revendication 1, dans lequel ladite pluralité de rapports de transmission différents comprend un rapport de transmission de point mort auquel le couple/la vitesse de l'élément rotatif (8) est transmis inchangé au différentiel (12), et au moins un rapport de transmission, auquel le couple/la vitesse de l'élément rotatif (8) est transmis à une valeur accrue ou réduite au différentiel (12).

3. Ensemble différentiel selon la revendication 1 ou 2, dans lequel ledit élément de support rotatif (8) comprend une première partie (8') définissant une première ouverture (8b) configurée pour permettre un passage de l'un desdits arbres (5, 6), et une deuxième partie (8''), fixée de manière réversible à ladite première partie (8') et définissant une deuxième ouverture (8a) configurée pour permettre un passage de l'autre desdits arbres (5, 6), l'une parmi lesdites première et deuxième parties (8', 8'') étant reliée audit arbre d'entraînement (3) au moyen d'un engrenage (7) .

4. Ensemble différentiel selon l'une quelconque des revendications précédentes, dans lequel ledit arbre de sélection (21) est configuré pour :
prendre une première position à laquelle il est inactif et ledit couple/ladite vitesse de l'élément de support rotatif (8) est transmis inchangé audit différentiel (12) ; et
prendre au moins une deuxième position à laquelle il est fixé audit carter (2) et ledit couple/ladite vitesse dudit élément de support rotatif (8) est transmis audit différentiel (12) en étant accru ou réduit.

5. Ensemble différentiel selon l'une quelconque des revendications précédentes, dans lequel ledit moyen de sélection de couple (10) comprend une pluralité de moyens de confinement latéral (38) interposés entre ledit arbre de sélection (21) et ledit premier engrenage (22),
entre ledit premier engrenage et ladite paire de deuxièmes engrenages (23', 23"), et
entre ladite paire de deuxièmes engrenages (23', 23") et ladite couronne dentée (24),
ladite pluralité de moyens de confinement latéral (38) maintenant ledit moyen de sélection de couple (10) solidaire de sorte qu'un déplacement dudit arbre de sélection (21) corresponde à un déplacement égal de tous les autres éléments.

6. Ensemble différentiel selon l'une quelconque des revendications précédentes, dans lequel l'engrènement est obtenu au moyen de dentures respectives avec des dents droites portées par les éléments d'engrènement respectifs.

7. Ensemble différentiel selon l'une quelconque des revendications précédentes, comprenant un moyen de blocage (17) configuré pour bloquer le fonctionnement dudit différentiel (12).

8. Ensemble différentiel selon l'une quelconque des revendications précédentes, comprenant un moyen de déplacement (27) configuré pour déplacer ledit arbre de sélection (21), ledit moyen de déplacement (27) comprenant un bras de soutien (39) relié audit arbre de sélection (21) et un actionneur (41), configuré pour déplacer ledit bras de soutien (39).

9. Ensemble différentiel selon la revendication 8, dans lequel ledit bras de soutien (39) comprend une première extrémité (39a) reliée audit actionneur (41), une deuxième extrémité (39b) articulée avec ledit arbre de sélection (21) et articulée, à une position intermédiaire entre lesdites extrémités (39a, 39b), avec ledit carter (2).

10. Ensemble différentiel selon la revendication 8 ou 9, dans lequel ledit actionneur (41) est un actionneur pneumatique.
